# EUROPEAN PATENT APPLICATION

(11) **EP 3 951 621 A1**
(43) Date of publication of application: **09.02.2022**
(21) Application number: 21763855.0
(22) Date of filing: 05.03.2021
(51) Int. Cl.: G06F 16/953, G06Q 10/06

(54) **DATA COLLECTION METHOD AND SYSTEM**

(30) Priority: 05.03.2020 CN 202010146387; 05.03.2020 CN 202010150890
(71) Applicant: Guangzhou Quick Decision Information Technology Co., Ltd., Guangzhou, Guangdong 510000 (CN)
(72) Inventor: LI, Shaohui, Guangzhou, Guangdong 510000 (CN); WU, Lianwang, Guangzhou, Guangdong 510000 (CN); LIU, Pingfeng, Guangzhou, Guangdong 510000 (CN)
(74) Representative: Dr. Gassner & Partner mbB
(86) International application number: PCT/CN2021/079184
(87) International publication number: WO 2021/175302

(57) **Abstract**

Embodiments of the application disclose a data acquisition method and system. The method includes that: an acquisition end sets at least one acquisition domain for each of at least one data acquisition module, and presets a threshold value for acquisition times of the acquisition domain; a shunting end generates a common acquisition unit, sends the common acquisition unit to a plurality of user terminals, and determines whether there is a target data acquisition module set with a target acquisition domain in at least one data acquisition module on the basis of first data fed back by the user terminals on the common acquisition unit, herein the target acquisition domain refers to an acquisition domain matched with the first data; if yes, whether the acquisition times of the target acquisition domain of the target data acquisition module reach a threshold value or not is determined; if no, the target data acquisition module is sent to the user terminals; and the user terminals feed back second data to the received target data acquisition module, and send the second data to the acquisition end. The application can avoid the waste of data traffic during questionnaire recovery, save the traffic resources, and reduce the cost.

## Description

### Technical Field

The application relates to the field of data transmission, and in particular, to a data acquisition method and system.

### Background

In recent years, network questionnaire has been widely used in daily life. The network questionnaire is an important means to survey and count certain information. The accuracy of questionnaires is in direct proportion to the number of questionnaire surveys, and the number of the questionnaire surveys is in direct proportion to the efficiency of the questionnaire surveys, so the efficiency of questionnaire surveys will directly affect of the accuracy of the questionnaire surveys. Therefore, how to improve the efficiency of the questionnaire surveys is always one of the most important technical problems to ensure the accuracy of the questionnaire surveys.

### Summary

One of the embodiments of the application provides a data acquisition method. In some embodiments, the data acquisition method may include the following operations. An acquisition end may set at least one acquisition domain for each of at least one data acquisition module, and preset a threshold value for acquisition times of the acquisition domain. A distributing end may send the data acquisition module to a plurality of target object terminals on the basis of the acquisition domain by calling a sending interface of one or more communication platforms. The plurality of target object terminals may feed back at least one piece of data online after receiving the data acquisition module online, and return the at least one piece of data to the acquisition end online. The data acquisition end may perform online analysis on the basis of the received at least one piece of data.

In some embodiments, the data acquisition method may include the following operations. An acquisition end may set at least one acquisition domain for each of at least one data acquisition module, and preset a threshold value for acquisition times of the acquisition domain. A shunting end may generate a common acquisition unit, send the common acquisition unit to a plurality of user terminals, and determine whether there is a target data acquisition module set with a target acquisition domain in at least one data acquisition module on the basis of first data fed back by the user terminals on the common acquisition unit, herein the target acquisition domain refers to an acquisition domain matched with the first data. If yes, whether the acquisition times of the target acquisition domain of the target data acquisition module reach a threshold value or not is determined. If no, the target data acquisition module is sent to the user terminals. The user terminals may feed back second data to the received target data acquisition module, and send the second data to the acquisition end.

In some embodiments, a data acquisition system may include an acquisition end, a shunting end, and user terminals. The acquisition end may be configured to set at least one acquisition domain for each of at least one data acquisition module, and preset a threshold value for acquisition times of the acquisition domain. The shunting end may be configured to generate a common acquisition unit, send the common acquisition unit to a plurality of user terminals, and determine whether there is a target data acquisition module set with a target acquisition domain in at least one data acquisition module on the basis of first data fed back by the user terminals on the common acquisition unit, herein the target acquisition domain refers to an acquisition domain matched with the first data. If yes, whether the acquisition times of the target acquisition domain of the target data acquisition module reach a threshold value or not is determined. If no, the target data acquisition module is sent to the user terminals. The user terminals may be configured to feed back second data to the received target data acquisition module, and send the second data to the acquisition end.

One of the embodiments of the application provides a data acquisition apparatus, including a processor. The processor is configured to execute the data acquisition method.

One of the embodiments of the application provides a computer readable storage medium. The computer readable storage medium stores computer instructions. A computer executes the data acquisition method after reading the computer instructions in the storage medium.

### Brief Description of the Drawings

The application will be further described with exemplary embodiments. These exemplary embodiments will be described in detail through accompanying drawings. These embodiments are unrestrictive. In these embodiments, the same numbers represent the same structures.
Fig. 1 is a schematic diagram of a first implementation manner of an application scenario of a data acquisition system according to some embodiments of the application.
Fig. 2 is a module diagram of a first implementation manner of a data acquisition system according to some embodiments of the application.
Fig. 3 is an exemplary flowchart of a first implementation manner of a data acquisition method according to some embodiments of the application.
Fig. 4 is an exemplary flowchart of a second data storage method according to some embodiments of the application.
Fig. 5 is an exemplary flowchart of a second implementation manner of a data acquisition method according to some embodiments of the application.
Fig. 6 is a schematic diagram of a first implementation manner of an application scenario of a directional data acquisition system according to some embodiments of the specification.
Fig. 7 is a module diagram of a second implementation manner of a directional data acquisition system according to some embodiments of the specification.
Fig. 8 is an exemplary flowchart of a third implementation manner of a directional data acquisition method according to some embodiments of the specification.
Fig. 9A, Fig. 9B, and Fig. 9C are schematic diagrams of a data acquisition logic structure according to some embodiments of the specification.
Fig. 10A and Fig. 10B are schematic diagrams of an acquisition structure of a click question according to some embodiments of the specification.
Fig. 11 is an exemplary flowchart of executing a data acquisition body according to a data acquisition logic according to some embodiments of the application.

### Detailed Description of the Embodiments

To describe technical solutions in embodiments of the application more clearly, the following briefly describes the accompanying drawings required for describing the embodiments. It is apparent that the accompanying drawings in the following description are only some examples or embodiments of the application. Those skilled in the art can also apply the application to other similar situations according to these accompanying drawings without any creative work. Unless apparent from the language environment or otherwise stated, the same reference signs in the drawings represent the same structures or operations.

It should be understood that "system", "apparatus", "unit", and/or "module" used herein are/is methods/a method used to distinguish different components, elements, parts, portions, or assemblies of different levels. However, if other terms may achieve the same purpose, these terms may be replaced with other expressions.

As shown in the application and the claims, terms such as "a/an", "one", "a kind of", and "the" do not refer in particular to a singular form but may also include a plural form, unless exceptional cases are clearly indicated in the context. In general, terms "include" and "contain" only indicate inclusion of steps and elements that are clearly identified, these steps and elements do not form an exclusive enumeration, and a method or equipment may also include other steps or elements.

In the application, the flowchart is used to describe operations executed by a system according to the embodiments of the application. It should be understood that previous or subsequent operations are not always executed accurately in sequence. Instead, each step may be processed in an inverted sequence or at the same time. In addition, other operations may also be added to these processes, or one or more operations may be removed from these processes.

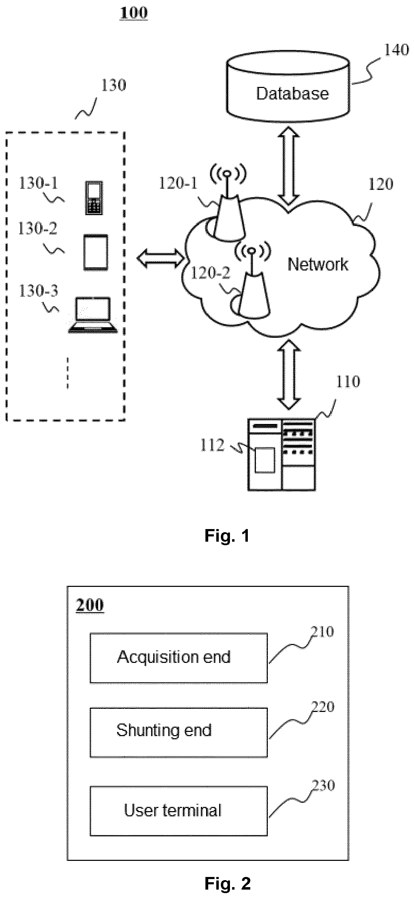

Fig. 1 is a schematic diagram of an application scenario of a data acquisition system according to some embodiments of the application.

A data acquisition system 100 may be used in the field of questionnaire recovery. Specifically, corresponding indexes may be preset for the options in a plurality of questionnaires, and the plurality of questionnaires are distributed and recovered on the basis of an index completion situation. Only the questionnaires that fail to meet quota indexes are distributed to users and recovered. Specifically, after the recovery number of an option in a questionnaire reaches a standard, the questionnaire is not distributed to a user that answers the options. In addition, if the recovery number of the option in other questionnaires does not reach a standard, the other questionnaires may be distributed to the user. When a user answers a network questionnaire, corresponding data traffic needs to be distributed. Therefore, the waste of the data traffic may be prevented, and the cost may be reduced through the system.

The data acquisition system 100 may be an online service platform used in Internet services. For example, the data acquisition system 100 may be used in an online questionnaire survey platform. The data acquisition system 100 may include a server 110, a network 120, a user terminal 130, and a database 140. The server 110 may include a processing device 112.

In some embodiments, the server 110 may be configured to preset information and/or data related to corresponding indexes for options in a plurality of questionnaires. For example, the server 110 may set at least one acquisition domain (equivalent to a certain option in a questionnaire) for each of at least one data acquisition module, and presets a threshold value (equivalent to a recovery quota index corresponding to each option in the questionnaire) for acquisition times of an acquisition domain. The server 110 may be an independent server or a server group. The server group may be integrated or distributed (for example, the server 110 may be a distributed system). In some embodiments, the server 110 may be regional or remote. For example, the server 110 may access the information and/or data stored in the user terminal 130 or the database 140 through the network. In some embodiments, the server 110 may be directly connected to the user terminal 130 and the database 140 to access the information and/or data stored therein. In some embodiments, the server 110 may be executed on a cloud platform. For example, the cloud platform may include one or any combination of private cloud, public cloud, mixed cloud, community cloud, distributed cloud, internal cloud, etc.

In some embodiments, the server 110 may include a processing device 112. The processing device 112 may process data and/or information related to setting a data acquisition module to execute one or more functions described in the application. For example, the processing device 112 may set at least one acquisition domain (equivalent to a certain option in a questionnaire) for each of at least one data acquisition module, and preset a threshold value (equivalent to a recovery quota index corresponding to each option in the questionnaire) for acquisition times of the acquisition domain. In some embodiments, the processing device 112 may include one or more sub-processing devices (for example, a single-core processing device or a multi-kernel and multi-core processing device). As an example merely, the device 112 may include a Central Processing Unit (CPU), an Application Specific Integrated Circuit (ASIC), an Application Specific Instruction Set Processor (ASIP), a Graphics Processor (GPU), a Physical Processor (PPU), a Digital Signal Processor (DSP), a Field Programmable Gate Array (FPGA), a Programmable Logical Circuit (PLD), a controller, a micro-controller unit, a Reduced Instruction Set Computer (RISC), a microprocessor, etc. or any combination of the above.

The network 120 may facilitate exchange of data and/or information, and the data and/or information may include first data and second data sent to the server 110 by the user terminal 130, i.e., the data fed back to a common acquisition model and the data fed back to a data acquisition module by a user. In some embodiments, one or more components (the user terminal 130 and the database 140) in the data acquisition system 100 may send data and/or information to other components in the data acquisition system 100 through the network 120.

In some embodiments, the network 120 may be any type of wired or wireless network. For example, the network 120 may include a cable network, a wired network, an optical fiber network, a telecommunication network, an internal network, the Internet, a Local Area Network (LAN), a Wide Area Network (WAN), a Wireless LAN (WLAN), a Metropolitan Area Network (MAN), a Public Switched Telephone Network (PSTN), a Bluetooth network, a ZigBee network, a Near Field Communication (NFC) network, or any combination of the above.

In some embodiments, the network 120 may include one or more network access points. For example, the network 120 may include wired or wireless network access points, for example, base station and/or Internet switch points 120-1, 120-2, .... Through these access points, one or more components of the data acquisition system 100 may be connected to the network 120 to exchange data and/or information.

The user terminal 130 may be a terminal of a device with a data processing function, which may include one or any combination of a mobile phone 130-1, a tablet computer 130-2, a notebook computer 130-3, etc. In some embodiments, the user terminal 130 may include an apparatus with a data sending function, which sends the data to the server 110 when the first data is fed back. In some embodiments, the user terminal 130 may send the data to the server 110 through the network 120. For example, the user terminal 130 may send the first data to the server 110 through the network 120.

The database 140 is configured to provide an information source for the system 100. The database 140 may be configured to provide service related information for the system 100, for example, provide a plurality of questionnaires that need to be recovered. For another example, the database 140 may also include all questionnaires for a specific field, etc. The specific field may be the fields of medical treatment, media, and science and technology. The database 140 may be implemented in a single central server, and a plurality of servers or a plurality of personal devices connected through communication links. The database 140 may be generated by a plurality of personal devices and a cloud server. In some embodiments, the database 140 may be configured to store recovered questionnaires. In some embodiments, the database 140 may be a plurality of data pools which are configured to store questionnaires in different acquisition domains. In some embodiments, the database 140 may store the acquisition domain of each questionnaire and a threshold value of the acquisition times of each acquisition domain. In some embodiments, the database 140 may store information and/or instructions executed or used by the server 110 to execute exemplary methods described in the application. In some embodiments, the database 140 may include a high-capacity memory, a removable memory, a volatile read-write memory (for example, a Random Access Memory (RAM)), a Read-Only Memory (ROM), or any combination of above. In some embodiments, the database 140 may be implemented on a cloud platform. For example, the cloud platform may include private cloud, public cloud, mixed cloud, community cloud, distributed cloud, internal cloud, etc., or any combination of above.

In some embodiments, the database 140 may be connected with the network 120 to communicate with one or more components (for example, the server 110, the user terminal 130, etc.) of the system 100. One or more components of the data acquisition system 100 may access the data or instructions stored in the database 140 through the network 120. In some embodiments, the database 140 may be directly connected or communicate with one or more components (for example, the server 110, the user terminal 130, etc.) in the data acquisition system 100. In some embodiments, the database 140 may be a part of the server 110.

Fig. 2 is a module diagram of a data acquisition system according to some embodiments of the application. As shown in Fig. 2, the data acquisition system may include an acquisition end 210, a shunting end 220, and a user terminal 230.

The acquisition end 210 may be configured to set at least one acquisition domain for each of at least one data acquisition module, and preset a threshold value for acquisition times of the acquisition domain. In some embodiments, the acquisition end 210 is configured to construct a data pool for each of the at least one data acquisition module, and segment the data pool into a plurality of sub-data pools. The plurality of sub-data pools are respectively configured to store the second data fed back by the user terminals matched with the acquisition domain. In some embodiments, the storage capacity of the sub-data pool is in positive correlation with the acquisition times of the acquisition domain.

The shunting end 220 may be configured to generate a common acquisition unit, send the common acquisition unit to a plurality of user terminals, and determine whether there is a target data acquisition module set with a target acquisition domain in the at least one data acquisition module on the basis of first data fed back by the user terminals on the common acquisition unit, herein, the target acquisition domain refers to an acquisition domain matched with present target the first data; if yes, determine whether the acquisition times of the target acquisition domain of the target data acquisition module reach a threshold value or not; and if no, send the target data acquisition module to the user terminals. In some embodiments, the shunting end 220 is configured to extract the common acquisition unit from the at least one data acquisition module. In some embodiments, the shunting end 220 is configured to generate the common acquisition unit on the basis of the acquisition domain.

The user terminal 230 may be configured to feed back second data to the received target data acquisition module, and send the second data to the acquisition end.

It should be understood that the system and modules thereof as shown in Fig. 2 may be implemented in various manners. For example, in some embodiments, the system and the modules thereof may be implemented by hardware, software, or a combination of software and hardware. The hardware part may be implemented by a special logic. The software part may be stored in a memory and executed by a proper instruction execution system such as a microprocessor or dedicated design hardware. Those skilled in the art can understand that the previously described method and system may be implemented by using a computer-executable instruction and/or including in a processor control code. Such a code is provided in, for example, a carrier medium like a magnetic disk, a Compact Disc (CD), or a Digital Video Disk-Read Only Memory (DVD-ROM), a programmable memory like a read-only memory (firmware), or a data carrier like an optical or electronic signal carrier. The system and modules thereof in the application may be implemented by a hardware circuit, for example, a very-large-scale integrated circuit or gate array, a semiconductor like a logic chip, a transistor, etc., or a programmable hardware device like a field-programmable gate array, a programmable logic device, etc., or may be implemented by, for example, various types of software executed by a processor, or may be implemented by a combination (for example, firmware) of the hardware circuit and the software.

It is to be noted that the above description about a candidate option display and determination system and modules thereof is only for ease of description and may not limit the application to the scope of the listed embodiments. It can be understood that those skilled in the art, after understanding the principle of the system, may freely combine each module or form subsystems for connection with the other modules without departing from the principle. For example, in some embodiments, for example, the acquisition end 210, the shunting end 220, and the user terminal 230 disclosed in Fig. 2 may be different modules in one system, or may be one module that realizes functions of two or more modules above. For example, the acquisition end 210 and the shunting end 220 may be a module that has a data acquisition function and a data shunting function at the same time. For example, each module may share one storage module. Various modules may also have respective storage modules. Such transformations all fall within the scope of protection of the application.

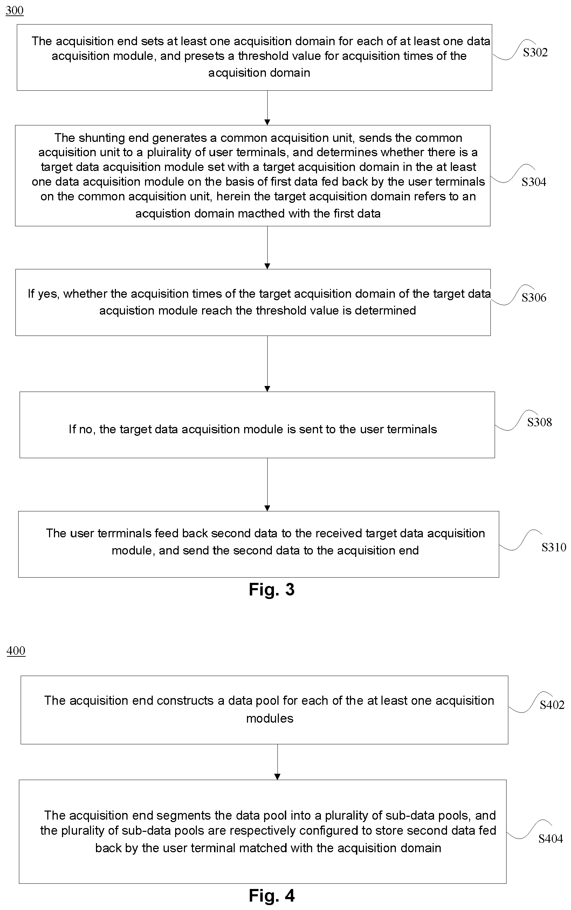

Fig. 3 is an exemplary flowchart of a data acquisition method according to some embodiments of the application. As shown in Fig. 3, a method 300 includes the following steps.

At Step 302, an acquisition end sets at least one acquisition domain for each of at least one data acquisition module, and presets a threshold value for acquisition times of the acquisition domain. Specifically, Step 302 may be executed by the acquisition end 210.

The acquisition end refers to a terminal for acquiring information, for example, a computing device, for another example, a communication device of the computing device or an application program, with an information acquisition function, on the computing device. In some embodiments, the acquisition end may have a plurality of functions. In some embodiments, the acquisition end may have corresponding functions according to different application scenarios. For example, the acquisition end may be applied to a questionnaire survey scenario. Correspondingly, the acquisition end may have the functions of editing a survey questionnaire, distributing the questionnaire, recovering the questionnaire, etc. In some embodiments, the acquisition end may also set different conditions for recovering the questionnaire, for example, recovering one or more types of questionnaires, for another example, setting different recovery quantities for different types of questionnaires.

The data acquisition module may be a module configured to carry data at the acquisition end. In some embodiments, the data acquisition module may be configured to carry questionnaire questions. In some embodiments, different questionnaire types may correspond to different acquisition modules, for example, questionnaire 1 corresponds to data acquisition module 1, questionnaire 2 corresponds to data acquisition module 2, etc. In some embodiments, the acquisition end may acquire data through the data acquisition module. For example, the acquisition end sends the data acquisition module to different acquisition objects. The acquisition objects feed back data to the data acquisition module, and the feedback data is the data acquired by the acquisition end. The acquisition may aim at different acquisition objects. For a survey scenario, the data acquired by the acquisition end is a questionnaire answered by the acquisition objects.

In some embodiments, the acquisition domain may represent the information of the acquisition objects. For example, different ages of the acquisition objects, 20-30 years old, 30-40 years old, etc; different genders of acquisition objects, male and female; other characteristics of the acquisition objects, users concerning baby and maternal products, users concerning electronic products, etc. In some embodiments, the acquisition domain may be options in a questionnaire. For example, "What's your hobby? A. Books. B. Movies" in a questionnaire, the acquisition domain may select "Books" or select "Movies". The acquisition times of the acquisition domain may be the number of recovering the questionnaires answered by the acquisition objects in the acquisition domain. For example, 20-30 years old and 100 questionnaires mean recovering 100 questionnaires answered by the users at 20-30 years, and 30-40 years old and 50 questionnaires mean recovering 50 questionnaires answered by the users at 30-40 years. In some embodiments, the situation that a user answers a questionnaire may be regarded as one time of the acquisition times. In some embodiments, the situation that the same user answers the same questionnaire may be regarded one time of the acquisition times, for example, the situation that user A answers questionnaire 1 three times may be regarded as answering once. Through the embodiment, the acquired data may be prevented from repeating. For the field of survey, the questionnaires answered by three different users have greater survey reference value than three questionnaires answered by the same user.

In some embodiments, the acquisition end may set an acquisition domain for each data acquisition module. For the field of survey, acquisition domains are set for different questionnaires. For example, acquisition domains 20-30 years old, 30-40 years old, and 40-50 years old are set for questionnaire 1; and acquisition domains 20-30 years old, and 40-50 years old are set for questionnaire 2. In some embodiments, the acquisition end may set a threshold value for the acquisition times of different acquisition domains of each data acquisition module. The threshold values of the acquisition times of the same acquisition domain of different data acquisition modules may be the same or may be different. The acquisition times of different acquisition domains of the same data acquisition module may be the same or may be different. For example, the acquisition domain of 20-30 years old and the threshold value of the acquisition times of 20 questionnaires, the acquisition domain of 30-40 years old and the threshold value of the acquisition times of 40 questionnaires, and the acquisition domain of 40-50 years old and the threshold value of the acquisition times of 20 questionnaires are set for questionnaire 1. The acquisition domain of 20-30 years old and the threshold value of the acquisition times of 20 questionnaires, and the acquisition domain of 40-50 years old and the threshold value of the acquisition times of 50 questionnaires are set for questionnaire 2.

At Step 304, a shunting end generates a common acquisition unit, sends the common acquisition unit to a plurality of user terminals, and determines whether there is a target data acquisition module set with a target acquisition domain in the at least one data acquisition module on the basis of first data fed back by the user terminals on the common acquisition unit. The target acquisition domain refers to an acquisition domain matched with the first data. Specifically, Step 304 may be executed by the acquisition end 220.

The shunting end may be a port with a data processing function and a data shunting function. The common acquisition unit may be a unit with a common data storage function and a common data acquisition function. In some embodiments, the common acquisition unit may be configured to determine whether a user complies with the acquisition domain and which acquisition domain the user belongs to. It may be understood that common data carried in the common acquisition unit may be the data related to the acquisition domain, for example, test questions related to the acquisition domain. Exemplarily, the acquisition domain aims at the ages of the acquisition objects. The common data in the common acquisition unit may be a test question about age, for example, "How old are you? A. 20-30, B. 30-40, C. 40-50". In some embodiments, the acquisition end may generate the common acquisition unit according to the acquisition domains of different data acquisition modules. For example, the acquisition domain of questionnaire A is different ages, the acquisition domain of questionnaire B is different genders, and the data carried by the common acquisition unit may include gender test questions and age test questions. In some embodiments, the acquisition end may extract the common acquisition unit from the data acquisition module. Specifically, test questions related to the acquisition domain involved in the data acquisition module are extracted and placed in the common acquisition unit. For example, the acquisition domain of questionnaire A is different ages, questionnaire A includes a test question for asking the ages of users, and the test question is extracted and placed in the common acquisition unit. The acquisition domain of questionnaire B is different genders, questionnaire B includes a test question for asking the genders, and the test question is extracted and placed in the common acquisition unit. Specifically, when the acquisition domain is an option in a questionnaire, the question corresponding to the option is placed in the common acquisition module. In some embodiments, the common acquisition unit may be directly generated and/or directly extracted on the basis of the data acquisition module according to actual situations For example, the acquisition domain of questionnaire A is different ages and includes an age test question, the acquisition domain of questionnaire B is the gender but does not include a gender test question, and the acquisition end may extract the age test question from questionnaire A, automatically generate a gender test question, and place the gender test question in the common acquisition unit.

The user terminal refers to a terminal configured to feed back data to a data acquisition module and/or a common acquisition unit by an acquisition object (or a user). For example, a computer, a mobile phone, etc. The first data may be the data fed back to a common data acquisition end by a user. For example, a result answered to the age question by the user, for example, the chose "A. 20-30".

The target acquisition domain may be an acquisition domain matched with the first data, for example, the acquisition domain matched with the previously described "A. 20-30" is the age 20-30. In some embodiments, the target data acquisition module refers to a data acquisition module set with a target acquisition domain, for example, the acquisition domain of questionnaire 1 is 20-30 and 30-40, and the acquisition domain of questionnaire 2 is 30-40 and 40-50, then questionnaire 1 is the target data acquisition module.

In some embodiments, whether there is a target data acquisition module may be determined according to the first data fed back by the user. For example, for the first data "A. 20-30", if there is an acquisition domain of 20-30 in a questionnaire, then there is a target data acquisition module. If there is no acquisition domain of 20-30 in a questionnaire, then there is no target data acquisition module. In some embodiments, the target acquisition module may be determined to be one or more.

At Step 306, if yes, whether the acquisition times of the target acquisition domain of the target data acquisition module reach a threshold value or not is determined. Specifically, Step 306 may be executed by the shunting end 220.

In some embodiments, when whether there is a target data acquisition module is determined on the basis of the first data fed back by the user, whether the acquisition times of the acquisition domain, corresponding to the first data, of the target data acquisition module reach a threshold value or not is determined. For example, for the first data "A. 20-30", if there is the acquisition domain of 20-30 of questionnaire A and questionnaire B, then whether the actual recovery quantity of the acquisition domain 20-30 of the questionnaire A and questionnaire B reaches a preset recovery quantity threshold value or not is determined.

In some embodiments, when it is determined that there is no target data acquisition module according to the first data fed back by the user, then there is no questionnaire that needs to be answered by the user, so an operation may not be performed.

At Step 308, otherwise, the target data acquisition module is sent to the user terminal. Specifically, Step 308 may be executed by the shunting end 220.

In some embodiments, if the acquisition times of the target acquisition domain of the target data acquisition module have not reached the preset threshold value, then the target data acquisition module is sent to the user terminal that feeds back the first data. For example, for the first data "A. 20-30", if there is an acquisition domain of 20-30 of questionnaire A, for the situation that the preset threshold value of the acquisition domain of 20-30 of questionnaire A is 50 questionnaires and the actual recovery quantity is 38 questionnaires, then the preset threshold value of the acquisition domain of 20-30 of questionnaire A is not saturated, and the questionnaire A is sent to a user corresponding to the answer "A. 20-30".

In some embodiments, when the acquisition times of the target acquisition domain of the target data acquisition module has reached a preset threshold value, then the target data acquisition module is not operated. For the situation that the preset threshold value of the acquisition domain of 20-30 of questionnaire A is 40 questionnaires and the actual recovery quantity is 40 questionnaires, it is known that the preset threshold value of the acquisition domain of 20-30 of questionnaire A is not saturated, and the questionnaire A is not operated, or the questionnaire A is not sent to a user to the answer of "A. 20-30".

It may be understood that when there are a plurality of target data acquisition modules and all acquisition times of each of the target acquisition domains have not reached a corresponding threshold value, then the plurality of target data acquisition modules may be sent to the user terminal. For example, the first data fed back by user A is 20-30 years old, the determined target data acquisition module includes questionnaires 1 and 2, and the target acquisition domains 20-30 of both questionnaires do not reach respective threshold values, then both questionnaire 1 and questionnaire 2 are sent to the user A.

At Step 310, the user terminal feeds back second data to the received target data acquisition module, and sends the second data to the acquisition end. Specifically, Step 310 may be executed by the user terminal 230.

The second data may be the data fed back to the target data acquisition end by the user. For the field of questionnaires, the second data is the answer information of the user to a received survey questionnaire question. Continuously taking the previously described example as an example, the second data is the information of the user after answering the question in questionnaire A.

In some embodiments, the user terminal feeds back the second data to the received target data acquisition module, and sends the second data to the acquisition end, so as to realize the recovery of the questionnaire.

Through the previously described embodiments, effective recovery of questionnaires can be realized, and the waste of data traffic for recovering questionnaires can be avoided. It may be understood that, in order to achieve a survey objective, an investigator will generally set a certain acquisition requirement for a questionnaire. For example, the questionnaires answering a certain option (for example, 30 questionnaires with option A in question 12) need to be recovered, or the questionnaires in a certain survey scope (for example, 20 questionnaires of male) need to be recovered. Through the previously described embodiments, the options or the survey scope are taken as acquisition domains, when the acquisition number of the acquisition domain of the questionnaires reaches a threshold value, the questionnaire is not sent to a user any longer, which can avoid the waste of the data traffic.

Moreover, when a plurality of questionnaires are recovered simultaneously, not only the waste of the traffic data can be avoided, but also the overall recovery efficiency can be improved. It can be known from the previously described embodiments that when a plurality of questionnaires are recovered simultaneously and when the number of a certain acquisition domain of the plurality of questionnaires does not reach a standard, the plurality of questionnaire are all sent to users meeting the acquisition domain; and when only the number of a certain acquisition domain of part of the plurality of questionnaires does not reach the standard, the questionnaires that do not reach the standard are sent to the users meeting the acquisition domain.

Fig. 4 is an exemplary flowchart of a second data storage method according to some embodiments of the application. As shown in Fig. 4, a method 400 includes the following steps.

At Step 402, the acquisition end constructs a data pool for each of the at least one data acquisition module. Specifically, Step 402 may be executed by the acquisition end 210.

The data pool may be storage space that accommodates data, for example, a network magnetic disc and a cloud magnetic disc.

In some embodiments, the acquisition end constructs the network magnetic disc with certain storage space for each of the at least one data acquisition module. For example, the network magnetic disc in one-to-one correspondence with each questionnaire is constructed for each questionnaire through the acquisition end, and is configured to store the recovery data of each questionnaire (i.e., the questionnaire answered by a user). For example, questionnaire A corresponds to network magnetic disc A, and the network magnetic disc A is configured to store answered questionnaire A. Questionnaire B corresponds to network magnetic disc B, and the network magnetic disc B is configured to store answered questionnaire B. In some embodiments, the capacity of the network magnetic disc may be set according to the recovery demand of each questionnaire. For example, if the recovery demand of questionnaire A is 40 questionnaires, then the capacity of network magnetic disc A may accommodate at least 40 questionnaires. If the recovery demand of questionnaire B is 30 questionnaires, then the capacity of network magnetic disc B may accommodate at least 30 questionnaires. In addition, the capacity of network magnetic disc A may be greater than the capacity of network magnetic disc B.

At Step 404, the acquisition end segments the data pool into a plurality of sub-data pools. The plurality of sub-data pools are respectively configured to store the second data fed back by the user terminals matched with the acquisition domain. Specifically, Step 404 may be executed by the acquisition end 210.

The sub-data pools may be part storage space of the data pool. For example, network magnetic disc A includes sub-magnetic discs A1, A2, and A3. The capacity of A is equal to the sum of the capacity of A1, A2, and A3.

In some embodiments, the acquisition end segments the data pool into a plurality of sub-data pools. The sub-data pools are respectively configured to store second data fed back by the user terminal matched with the acquisition domain. For example, questionnaire A corresponds to network magnetic disc A. the acquisition domain and the threshold value of the acquisition times of questionnaire A are respectively: 50 questionnaires at the age of 20 to 30 need to be recovered, 40 questionnaires of male need to be recovered, and 60 questionnaires of females need to be recovered, then the total capacity of the network magnetic disc A may accommodate at least 150 questionnaires (50 questionnaires+40 questionnaires +60 questionnaires), and the capacity of the magnetic disc A1, A2, and A3 of the network magnetic disc may respectively accommodate at least 50 questionnaires, 40 questionnaires, and 60 questionnaires. Specifically, sub-magnetic disc A1 is configured to store the result of questionnaire A answered by the users at 20-30. Sub-magnetic disc A2 is configured to store the result of questionnaire A answered by male users. Sub-magnetic disc A3 is configured to store the result of questionnaire A answered by female users.

In some embodiments, the storage capacity of the sub-data pool is in positive correlation with the acquisition times of the acquisition domain. The storage capacity of the sub-data pool is higher, then the acquisition times of the acquisition domain is higher. Continuously taking the previously described example as an example, the capacity of the sub-magnetic disc A1 may be greater than the capacity of the sub-magnetic disc A2.

Through the embodiment, corresponding storage space is set for different questionnaires and different acquisition domains, which facilitates subsequent query of corresponding recovery questionnaires in classifications or query of recovery questionnaires in different acquisition domains.

In some embodiments, the application provides a data acquisition apparatus, including a processor. The processor is configured to execute the previously described data acquisition method.

In some embodiments, the application provides a computer readable storage medium. The storage medium stores computer instructions. A computer executes the previously described data acquisition method after reading the computer instructions in the storage medium.

It should be noted that the previously described description related to a process data acquisition method is only for example and explanation, and does not limit the scope of application of the application. Various modifications and variations may be made to the process data acquisition method by those skilled in the art under the guidance of the application. However, these modifications and variations are still within the scope of the application. For example, other steps, for example, a storage step and an inspection step, are added to the process data acquisition method.

The embodiments of the application may have, but not limited to, the following beneficial effects. (1) The application can avoid the waste of data traffic during questionnaire recovery, save the traffic resources, and reduce the cost. (2) When a plurality of questionnaires are recovered simultaneously, the overall efficiency can be improved. It is to be noted that different beneficial effects may be achieved in different embodiments. The beneficial effects achievable in different embodiments may be any one or combination of the above, or may be any other achievable beneficial effects.

The basic concepts have been described above. It is apparent to those skilled in the art that the above detailed disclosures are merely examples and not intended to limit the application. Those skilled in the art may make various modifications, improvements, and corrections to the application, even though not specified herein. Such modifications, improvements, and corrections are suggested in the application, and thus still fall within the spirit and scope of the exemplary embodiments of the application.

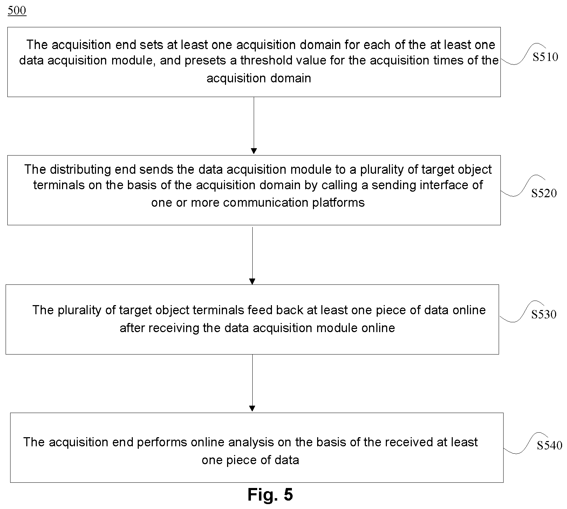

Fig. 5 is an exemplary flowchart of a data acquisition method according to some embodiments of the application. As shown in Fig. 5, a method 500 includes the following steps.

At Step 510, the acquisition end sets at least one acquisition domain for each of at least one data acquisition module, and presets a threshold value for acquisition times of the acquisition domain.

At Step 520, the distributing end sends the data acquisition module to a plurality of target object terminals on the basis of the acquisition domain by calling a sending interface of one or more communication platforms;

At Step 530, the plurality of target object terminals feed back at least one piece of data online after receiving the data acquisition module online, and return the at least one piece of data to the acquisition end online.

At Step 540, the acquisition end performs online analysis on the at least one piece of data based on the received at least one piece of data.

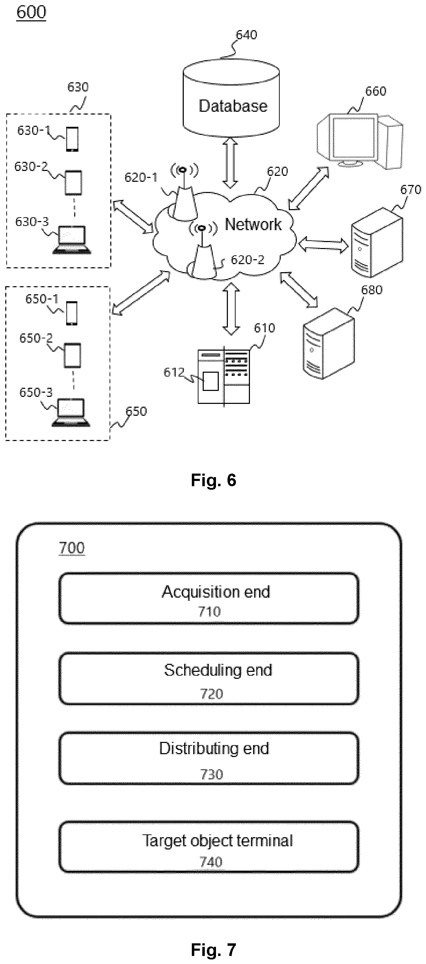

Fig. 6 is a schematic diagram of an application scenario of a directional data acquisition system 600 according to some embodiments of the specification.

The directional data acquisition system 600 may distribute survey questionnaires to target object terminals in an acquisition domain through a communication platform, so that manual distribution does not needed, and high-efficiency directional survey is realized. The directional data acquisition system 600 may be an online service platform used in Internet services. For example, the directional data acquisition system 600 may be used in an online questionnaire survey platform. The directional data acquisition system 600 may include a server 610, a network 620, a target object terminal 630, database 640, an acquisition end 650, a Scheduling end 660, a distributing end 670, and a communication platform 680. The server 610 may include a processing device 112.

In some embodiments, the server 610 may be configured to process information and/or data related to the direction data acquisition system 610. For example, the server 610 may perform online analysis on the data fed back by the target object terminal 630. The server 610 may be an independent server or a server group. The server group may be integrated or distributed (for example, the server 610 may be a distributed system). In some embodiments, the server 610 may be regional or remote. For example, the server 610 may access the information and/or data stored in the target object terminal 630 and the database 640 through the network 620. In some embodiments, the server 610 may be connected to the target object terminal 630 and the database 640 to access the information and/or data stored therein. In some embodiments, the server 610 may be executed on a cloud platform. For example, the cloud platform may include one or any combination of private cloud, public cloud, mixed cloud, community cloud, distributed cloud, internal cloud, etc.

In some embodiments, the server 610 may include a processing device 112. The processing device 112 may process data and/or information related to the directional data acquisition system 610 to execute one or more functions described in the application. For example, the processing device 112 may determine a data acquisition module according to an acquired first acquisition instruction. In some embodiments, the processing device 112 may include one or more sub-processing devices (for example, a single-core processing device or a multi-kernel and multi-core processing device). As an example merely, the processing device 112 may include a Central Processing Unit (CPU), an Application Specific Integrated Circuit (ASIC), an Application Specific Instruction Set Processor (ASIP), a Graphics Processor (GPU), a Physical Processor (PPU), a Digital Signal Processor (DSP), a Field Programmable Gate Array (FPGA), a Programmable Logical Circuit (PLD), a controller, a micro-controller unit, a Reduced Instruction Set Computer (RISC), a microprocessor, etc. or any combination of the above.

The network 620 may facilitate exchange of data and/or information, and the data and/or information may include the acquired first acquisition instruction. In some embodiments, one or more components (for example, the server 610, the target object terminal 630, the acquisition end 650, the Scheduling end 660, the distributing end 670, and a communication platform 680) of the directional data acquisition system 600 may send data and/or information to other components in the directional data acquisition system 600 through the network 620. In some embodiments, the network 620 may be any type of wired or wireless network. For example, the network 620 may include a cable network, a wired network, an optical fiber network, a telecommunication network, an internal network, the Internet, a Local Area Network (LAN), a Wide Area Network (WAN), a Wireless LAN (WLAN), a Metropolitan Area Network (MAN), a Public Switched Telephone Network (PSTN), a Bluetooth network, a ZigBee network, a Near Field Communication (NFC) network, or any combination of the above. In some embodiments, the network 620 may include one or more network access points. For example, the network 620 may include wired or wireless network access points, for example, base station and/or Internet switch points 620-1, 620-2, .... Through these access points, one or more components of the directional data acquisition system 600 may be connected to the network 620 to exchange data and/or information.

The target object terminal 630 may be a terminal of a device configured to feed back data (for example, one or more answers to survey questions) of a user (for example, an respondent to the questionnaire), which may include one or any combination of a mobile phone 630-1, a tablet computer 630-2, a notebook computer 630-3, etc. In some embodiments, the target object terminal 630 may include an apparatus with an input function, so as to input answer data of the survey question. In some embodiments, the target object terminal 630 may send the feedback (i.e., answer) data to the server 610.

The database 640 is configured to provide a source of other information for the directional data acquisition system 600. The database 640 may provide service related information for the directional data acquisition system 600. For example, the number of the users answering questions online, the duration of the users answering questions online, the number of text words entered by the users, etc. For another example, the database 640 may further include the information of users answering questions online, historical answers, etc. The information of the users may include user names, user ages, user positions, etc. The database 640 may be implemented in a single central server, and a plurality of servers or a plurality of personal devices connected through communication links. The database 640 may be generated by a plurality of personal devices and a cloud server. In some embodiments, the database 640 may store the data fed back from the target object terminal 630, for example, the answers of the respondents to the survey questions. In some embodiments, the database 640 may store information and/or instructions executed or used by the server 610 to execute exemplary methods described in the application. In some embodiments, the database 640 may include a high-capacity memory, a removable memory, a volatile read-write memory (for example, a Random Access Memory (RAM)), a Read-Only Memory (ROM), or any combination of above. In some embodiments, the database 640 may be implemented on a cloud platform. For example, the cloud platform may include private cloud, public cloud, mixed cloud, community cloud, distributed cloud, internal cloud, etc., or any combination of above.

In some embodiments, the database 640 may communicate with one or more components (for example, the server 610, the target object terminal 630, the acquisition end 650, the Scheduling end 660, the distributing end 670, and a communication platform 680) of the directional data acquisition system 600 through the network 620. One or more components of the directional data acquisition system 600 may access the data or instructions, for example, the answers to open questionnaire survey on employee engagement survey, employee satisfaction survey, and customer satisfaction survey, etc, stored in the database 640 through the network 620. In some embodiments, the database 640 may be directly connected or communicate with one or more components (for example, the server 610, the target object terminal 630, the acquisition end 650, the Scheduling end 660, the distributing end 670, and the communication platform 680) in the directional data acquisition system 600. In some embodiments, the database 640 may be a part of the server 610.

In some embodiments, the acquisition end 650 may be a terminal configured to determine a data acquisition module, for example, may be a terminal device configured to generate a survey question and an execution logic of the survey question. In some embodiments, the acquisition end 610 may also be a terminal for performing analysis on the received feedback data, for example, a device terminal for performing analysis on the answer data of a respondent to the survey question. The acquisition end 650 may be one or any combination of a mobile phone 650-1, a tablet computer 650-2, a notebook computer 650-3, etc.

The Scheduling end 660 may be a terminal configured to determine an acquisition domain, i.e., the Scheduling end 660 may determine a distributing scope of a data acquisition module generated by the acquisition end 650, for example, may be a terminal device for determining a survey population of a survey questionnaire. The Scheduling end 660 may be one or more servers, or may be one or more management terminal devices.

In some embodiments, the distributing end 670 may acquire the data in the Scheduling end 660, for example, an acquisition domain. The distributing end 670 may distribute data acquisition modules to a plurality of target object terminals 630 in the acquisition domain based on the acquired acquisition domain by calling a sending interface of one or more communication platforms 680. In some embodiments, the distributing end 670 may be a terminal for distributing the data acquisition modules, for example, a device terminal configured to distribute survey questions. The distributing end 670 may be one or more servers, or may be one or more management devices.

In some embodiments, the communication platform 680 may be a network platform configured to distribute data acquisition modules of the distributing end 670, for example, may be a platform configured to distribute survey questions. In some embodiment, the distributing end 670 may send the data acquisition modules to the communication platform 680 by calling a sending interface of the communication platform 680. The communication platform 680 may send the data acquisition modules to the target object terminal 630 using the communication platform through the sending interface of the communication platform 680. In some embodiments, the communication platform 680 may include, but is not limited to, a social networking platform, a network shopping platform, a network learning platform, a network reading platform, a network music platform, and a network game platform. The communication platform 680 may be installed on each terminal, for example, may be installed on one or any combination of a mobile phone, a tablet platform, a notebook computer, etc.

Fig. 7 is a module diagram of a directional data acquisition system 700 according to some embodiments of the specification. As shown in Fig. 7, the directional data acquisition system 700 may include an acquisition end 710, a Scheduling end 720, a distributing end 730, and a target object terminal 740.

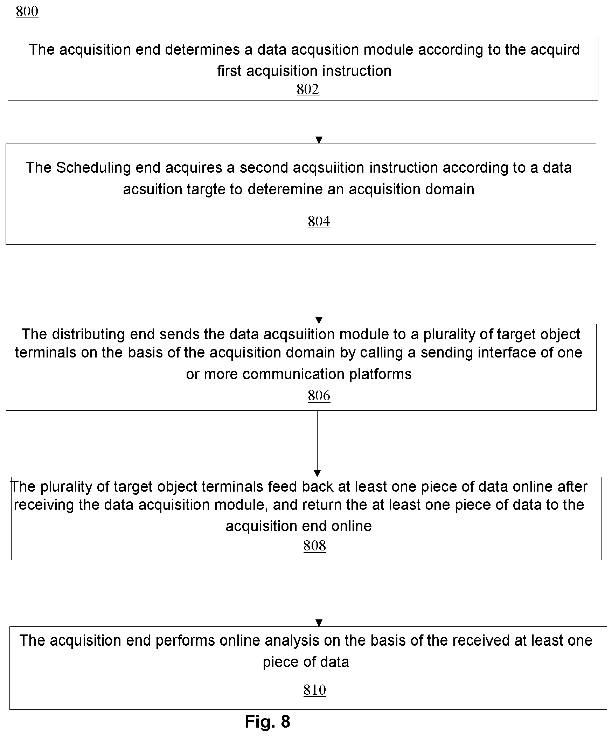

The acquisition end 710 may be configured to determine a data acquisition module according to an acquired first acquisition instruction, and perform online analysis on the basis of the received at least one piece of data. In some embodiments, the data acquisition module includes: a data acquisition logic structure and at least one data acquisition body. The data acquisition body is an execution unit configured to acquire data. The data acquisition logic structure includes one or a combination of the following logics: single execution, sequential execution, random execution, jump according to parameters, and/or jump according to acquired data. Specific reference is made to Fig. 8, Fig. 9A to 4C, and related description thereof, which is not described in detail herein.

The Scheduling end 720 may be configured to acquire a second acquisition instruction according to a data acquisition target to determine an acquisition domain. In some embodiments, the scheduling end 720 may also configured to determine one or more condition directions according to the second acquisition instruction, and determine a condition value of the one or more condition directions according to the second acquisition instruction. In some embodiments, the Scheduling end 720 may also be configured to determine a condition value of the acquisition domain through the fed back at least one piece of data on the basis of a first machine learning model.

The distributing end 730 may be configured to send the data acquisition modules to the plurality of target object terminals based on the acquisition domain by calling a sending interface of one or more communication platforms. In some embodiments, the distributing end 730 may also be configured to determine scheduled one or more communication platforms according to the acquisition domain, call the sending interface of the one or more communication platforms, and transmit a first parameter determined by the acquisition domain. In some embodiments, the distributing end 730 may also be configured to determine one or more communication platforms on the basis of a second machine learning model according to the condition direction and/or the condition value. Specific reference is made to Fig. 8 and related description thereof, which is not described in detail herein.

The target object terminal 740 may also be configured to feed back the at least one piece of data online after receiving the data acquisition module online, and return the at least one piece of data to the acquisition end online. In some embodiments, the target object terminal 740 may also be configured to execute the data acquisition body according to the data acquisition logic to acquire the at least one piece of data. In some embodiments, the target object terminal 740 may also be configured to acquire the first parameter transmitted when the communication platform is called, acquire a second parameter provided by the communication platform, and/or acquire a third parameter provided by the target object terminal, and execute the jump according to parameters according to the first parameter, the first parameter, and/or the third parameter. Specific reference is made to Fig. 8 and related description thereof, which is not described in detail herein.

In some embodiments, the target object terminal 740 may also be configured to display one or more paragraphs of text, and/or one or more pictures, acquire a third acquisition instruction, herein the third acquisition instruction is a first click at one or more text selection positions of the text, and/or a second click at one or more picture selection petitions of the picture, perform first differential display at the text selection position according to the first click, and/or, perform second differential display at the picture selection position according to the second click, and determine the at least one piece of data according to the first click and/or the second click. Specific reference is made to Fig. 8 and related description thereof, which is not described in detail herein.

It should be understood that the system and modules thereof shown in Fig. 7 may be implemented in various manners. For example, in some embodiments, the system and the modules thereof may be implemented by hardware, software, or a combination of software and hardware. The hardware part may be implemented by a special logic. The software part may be stored in a memory and executed by a proper instruction execution system such as a microprocessor or dedicated design hardware. Those skilled in the art can understand that the previously described method and system may be implemented by using a computer-executable instruction and/or including in a processor control code. Such a code is provided in, for example, a carrier medium like a magnetic disk, a Compact Disc (CD), or a Digital Video Disk-Read Only Memory (DVD-ROM), a programmable memory like a read-only memory (firmware), or a data carrier like an optical or electronic signal carrier. The system and modules thereof in the specification may be implemented by a hardware circuit, for example, a very-large-scale integrated circuit or gate array, a semiconductor like a logic chip, a transistor, etc., or a programmable hardware device like a field-programmable gate array, a programmable logic device, etc., or may be implemented by, for example, various types of software executed by a processor, or may be implemented by a combination (for example, firmware) of the hardware circuit and the software.

It is to be noted that the above description about a directional data acquisition system 700 and modules thereof is only for ease of description and cannot limit the specification to the scope of the listed embodiments. It can be understood that those skilled in the art, after understanding the principle of the system, may freely combine each module or form subsystems for connection with the other modules without departing from the principle. For example, the acquisition end 710, the Scheduling end 720, and the distributing end 730, and the target object terminal 740 disclosed in Fig. 7 may be different modules in one system, or may be one module that realizes functions of two or modules above. For another example, each module in the directional data acquisition system 700 may share one storage module. Various modules may also have respective storage modules. Such transformations all fall within the scope of protection of the specification.

Fig. 8 is an exemplary flowchart of a directional data acquisition method according to some embodiments of the specification.

At Step 802, the acquisition end determines a data acquisition module according to an acquired first acquisition instruction. Specifically, Step 802 may be executed by the acquisition end 710.

In some embodiments, the acquisition end may have a plurality of functions. In some embodiments, the acquisition end may have corresponding functions according to different application scenarios. For example, the acquisition end may be applied to a questionnaire survey scenario. Correspondingly, the acquisition end may have a function of editing a survey questionnaire.

In some embodiments, the first acquisition instruction may be any instruction generated by a user on an interaction interface of the acquisition end through a first interaction operation. The first interaction operation may include a survey questionnaire design operation. In some embodiments, the survey questionnaire design operation may include a data acquisition body design operation and a data acquisition logic structure design operation. In some embodiments, the first acquisition instruction is an instruction generated through a first interaction operation, and the first acquisition instruction may include a data acquisition body design instruction and a data acquisition logic structure design instruction.

In some embodiments, data acquisition module may refer to a module including a data acquisition logic structure and a data acquisition body. The data acquisition logic structure may be determined according to a data acquisition logic structure. The data acquisition body may be determined according to the data acquisition body.

In some embodiments, the data acquisition body may be an execution unit configured to acquire data. The data may be any data, for example, text, voice, and pictures. In some embodiments, the data may refer to survey questions in a survey questionnaire. In some embodiments, the survey questions may include different types of questions. Specifically, the survey questions may include, but are not limited to, picture hot spot region questions, PK questions, and ranking questions. In some embodiments, the picture hot spot region questions may be configured for a target object terminal to answer a hot spot region in the question. The hot spot region is any region in a picture set by the acquisition end. In some embodiments, PK questions may include, but are not limited to, at least one of picture PK questions and text PK questions. In some embodiments, the PK questions may be configured for the acquisition end to perform promotion screening on the target object terminals according to the answers of the target object terminals to the question, and the target object terminals after promotion may participate in the answer of subsequent survey questions. Taking the PK questions being text PK questions as an example, if the PK questions is "Please answer the time period you exercise every day in the following options", and the options are respectively A.9:00~10:00, B.13:00~14:00, if the answer of a target object terminal to the question is option A, then the target object terminal is promoted, and if the answer of the target object terminal to the question is option B, then the target object terminal is eliminated. In some embodiments, the ranking questions may be configured for the target object terminal to rank options in the question. The ranking operation of the target object terminals to the options may include click ranking and drag and drop ranking. Professional questionnaire design may be performed for complex questions according to the setting of different types of survey questionnaires, which improves the profession degree of the survey questionnaires, so that the survey questionnaires are analyzed more comprehensively and thoroughly.

In some embodiments, the data acquisition logic structure may refer to an execution logic of the data acquisition body. In some embodiments, the data acquisition logic structure may refer to an execution logic of a survey question. In some embodiments, the data acquisition logic structure includes but is not limited to one or a combination of the following logics: single execution, sequential execution, random execution, jump according to parameters, and/or jump according to acquired data.

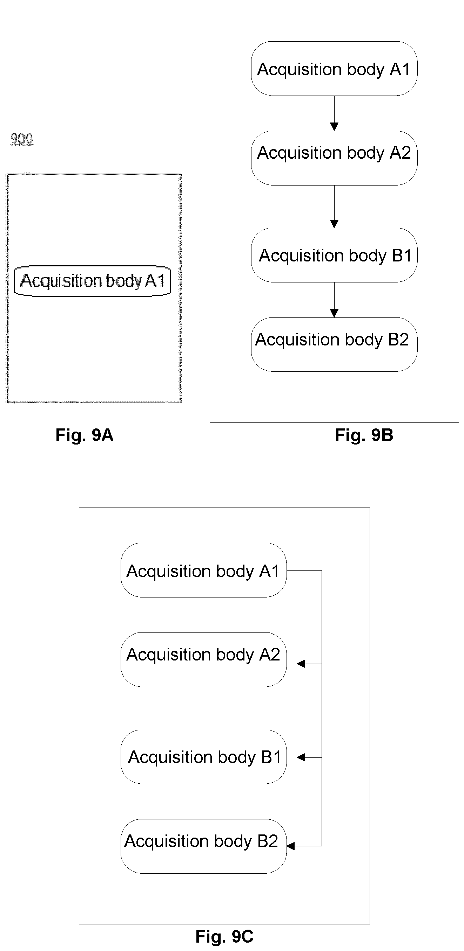

According to the data acquisition logic structure shown in Fig. 9A-9C, in some embodiments, the single execution may refer to that the data acquisition module includes only one data acquisition body, and only executes the data acquisition body, referring to Fig. 9A, which shows that only acquisition body 1 is executed during single execution. Exemplarily, taking the data acquisition body being a survey question and the data acquisition module being a survey questionnaire as an example, if there is only one survey question 1: "How old are you?" in the survey questionnaire, then only the question of "How old are you?" is executed.

In some embodiments, the sequential execution may refer to that the data acquisition module includes a plurality of data acquisition bodies, and corresponding data acquisition bodies are executed in sequence, referring to Fig. 9B, which shows that the data acquisition bodies may be executed sequentially according to an initial sequence of acquisition body 1, acquisition body 2, acquisition body 3, and acquisition body 4 during sequential execution. Exemplarily, taking the data acquisition bodies being survey questions, and the data acquisition module being a survey questionnaire as an example, if a plurality of survey questions included in the survey questionnaire are respectively survey question 1: "How old are you?" , survey question 2: "What's your gender?" , survey question 3: "Which of the following TV drama are you most looking forward to watching", and survey question 4: "Why are you looking forward to watching this TV drama?", then the target object terminal may be asked sequentially according to the sequence of survey question 1, survey question 2, survey question 3, and survey question 4.

In some embodiments, random execution may refer to that the data acquisition module includes a plurality of data acquisition bodies, and corresponding data acquisition bodies are executed sequentially according to a random sequence, referring to Fig. 9C, which shows that it may execute acquisition body 1 first, then execute acquisition body 3, next jump to execute acquisition body 2 after the execution of acquisition body 3 is completed, and finally, execute acquisition body 4 during the random execution, or it may execute acquisition body 2 first, then execute acquisition body 4, next jump to execute acquisition body 1 after the execution of acquisition body 4 is completed, and finally, execute acquisition body 3. The application does not limit the sequence of the random execution. Exemplarily, still taking the previously described example as an example, the target object terminal may be asked by survey question 1 first, then by survey question 3, next, by survey question 2, and finally, by survey question 4 when the random execution is performed.

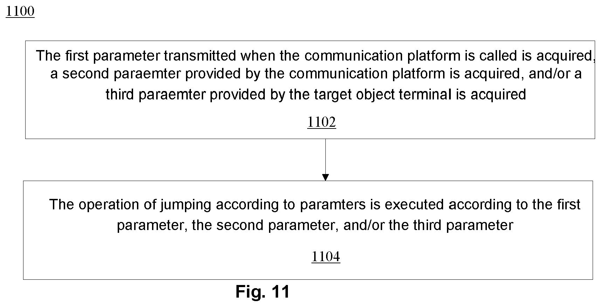

In some embodiments, the jump according to parameters may refer to select different data acquisition bodies according to the values of different parameters. The parameters may include a first parameter determined by an acquisition domain, a second parameter provided by a communication platform, and a third parameter provided by a target object terminal. Reference is made to Fig. 11 and related description for more details about a parameter adjustment logic, which is not described in detail herein.

In some embodiments, the previously described data acquisition logic structures may also be combined for use. Still taking the previously described example as an example, if the data acquisition logic structures include the combination of the two logics of the sequential execution and the random execution, then the target object terminal may be asked by survey question 1 and survey question in sequence, and then asked by survey question 4 or survey question 3 randomly.

At Step 804, the Scheduling end acquires a second acquisition instruction according to a data acquisition target, and determines an acquisition domain. Specifically, Step 804 may be executed by the acquisition end 720.

In some embodiments, the scheduling end may be a Scheduling end configured to determine an acquisition domain.

In some embodiments, the second acquisition instruction may be any instruction generated by a user on an interaction interface of the scheduling end through a second interaction operation. The second interaction operation may include a setting operation of at least one acquisition condition. In some embodiments, because the second acquisition instruction is an instruction generated through a second interaction operation, the second acquisition instruction may include at least one acquisition condition setting instruction.

In some embodiments, the acquisition condition may refer to a screening condition of a survey population of the survey questionnaire. In some embodiments, the data acquisition target may be a survey objective. In some embodiments, because the second acquisition instruction may be acquired according to the data acquisition target, the screening condition of the survey population may be acquired according to the survey objective. Exemplarily, taking a survey questionnaire on a smoking situation among middle-aged men as an example, because the survey objective is to investigate the smoking situation of the middle-aged men, the screening condition of the survey population may be the middle-aged men.

In some embodiments, the acquisition domain may be a set of at least one acquisition condition, i.e., may be a set of a screening condition of at least one survey population. The previously described example is still used. Taking a survey questionnaire on a smoking condition among middle-aged men as an example, the screening condition of the survey population may be a set of screening conditions for the age of middle-aged and the gender of male.

In some embodiments, the operation that the acquisition domain is determined may include the following operations. One or more condition directions are determined according to the second acquisition instruction. Condition values of one or more of the condition directions are determined according to the second acquisition instruction.

It can be known from previous description that the second acquisition instruction may be a set of at least one acquisition condition setting instruction. In some embodiments, the acquisition condition setting instruction may include a condition direction setting instruction and a condition value setting instruction. In some embodiments, the condition direction may refer to an orientation parameter for determining a survey population. In some embodiments, the orientation parameter includes but is not limited to the geographical location, behavior, interest, gender, educational background, etc. of the population. The behavior may be used to represent the category of occupation of the population. In some embodiments, the condition value may be a specific parameter value of the orientation parameter. For example, the orientation parameter is behavior and gender, if the behavior may include catering and food, maternity and child care, business service, and construction engineering, then the condition value corresponding to the behavior may be one or more of the catering and food, maternity and child care, business service, and construction engineering, and the condition value corresponding to gender may be male and/or female.

In some embodiments, the acquisition domain may be determined according to a condition value, i.e., a screening condition of the survey population may be determined according to the condition value. Still taking the previous description as an example, if the condition value is the catering and food of the catering and food, maternity and child care, business service, and construction engineering and the gender is female, then the screening conditions of the survey population are those who are engaged in catering and food and have the gender of female.

After the data fed back by part of the target object terminals is acquired, a subsequent acquisition domain may be updated on the basis of the feedback data. In some embodiments, the fed back data may be input into a first machine learning model to determine the condition value of the acquisition domain. The first machine learning model may be an unsupervised clustering model, for example, a K-mean clustering, a hierarchical clustering, and an Expectation Maximization (EM) algorithm. For example, an objective of the survey is to find the dress preferences of different occupational populations. In early survey, the acquisition domain is determined as the people of various occupations at the age of 20-60. Part feedback data is clustered on the basis of the unsupervised clustering model to obtain a clustering result. If the clustering result show that the dress preferences of civil personnel and civil servants are the same and are classified into the same category, in order to determine the difference of the dress preferences between the two occupations, the occupations of the civil personnel and the occupations of the civil servants may be subdivided. The subdivided categories may serve as a condition value of the acquisition domain. The first machine learning model may also be other models, such as classification model, for example, a CNN classification model, a decision tree model, and a naive Bayesian classification model.

At Step 806, the distributing end sends the data acquisition modules to a plurality of target object terminals on the basis of the acquisition domain by calling a sending interface of one or more communication platforms. Specifically, Step 806 may be executed by the distributing end 730.

In some embodiments, the distributing end may be configured to one or more communication platforms to be called. In some embodiments, the communication platform may refer to a platform for performing online information transmission. Specifically, the communication platform may include, but is not limited to, a social networking platform, a network shopping platform, a network learning platform, a network reading platform, a network music platform, and a network game platform.

In some embodiments, the operation that a sending interface of one or more communication platforms is called includes the following operations. One or more called communication platforms are determined according to an acquisition domain. The sending interface of one or more communication platforms is called. A first parameter determined by the acquisition domain is transmitted.

In some embodiments, the called one or more communications are determined according to the acquisition domain. Specifically, the called one or more communication platforms may be determined according to at least one acquisition condition included in the acquisition domain. In some embodiments, the communication platform may be determined according to a preset corresponding relationship between the at least one acquisition condition and the communication platform. Exemplarily, taking the acquisition condition being the population interested in scientific and technological journals as an example, the communication platform may be a network reading platform with the corresponding relationship with the scientific and technological journals. In some embodiments, the communication platform may also be determined according to the preset corresponding relationship and a preset priority relationship. The priority relationship may include, but is not limited to, the number of users, the ranking, and the docking cost of the platform. The previously described example is still used. Taking the acquisition condition being the population interested in the scientific and technological journals, if the preset priority relationship is the ranking of the users, then the platform with higher ranking of users of various network reading platforms may be selected, for example, Wechat reading, Snail reading, and Zhihu Bookstore.

In some embodiments, a sending interface of one or more communication platforms may be called, and a first parameter determined by the acquisition domain may be determined. Reference is made to Fig. 6 and related description thereof for details of the first parameter, which is not described in detail herein.

In some embodiments, the data acquisition modules may be sent to a plurality of target object terminals based on the acquisition domain. In some embodiments, the target object terminal may refer to a terminal that receives the data acquisition module and makes real-time feedback to the data acquisition module online, may also be a terminal that used by a respondent of the survey population that make real-time feedback to the data acquisition module. In some embodiments, the terminal includes, but is not limited to, a mobile phone, ipad, a notebook computer, a desktop computer, etc. In some embodiments, the data acquisition modules may be sent to a plurality of target object terminals on the basis of the acquisition domain by calling the sending interface of one or more communication platforms. Exemplarily, taking the communication platform being Sina Weibo and the acquisition domain being the population interested in food as an example, the data acquisition module may be sent to a plurality of target object terminals using Sina Weibo, and the interest setting of the target object terminal in Sina Weibo includes food.

In some embodiments, the operation that the distributing end may call a sending interface of one or more communication platforms includes the following operation. The one or more communication platforms on the basis of a second machine learning model are determined according to the condition direction and/or the condition value. In some embodiments, the second machine learning model may be a classification model, for example, a CNN classification model, a decision tree model, and a naive Bayesian classification model. The condition direction or the condition value is input into the classification model, and an obtained corresponding communication platform type is output. When the classification model is trained, the condition direction and the condition value with labels are input into the model for training. The label may be the type of the communication platform. The label may be one label, or may be a plurality of labels. For example, the input training data may be a condition value "an employee of a foreign company", and the label of the condition value may be "a global browser". For another example, the input training data may be a condition value "mother", and the label of the condition value may be "mother and child shopping platform", or "breeding communication platform". If the input training data is a multi-label, then a classification model may output the categories of a plurality of platforms in actual prediction.

At Step 808, the plurality of target object terminals feed back at least one piece of data online after receiving the data acquisition module online, and return the at least one piece of data to the acquisition end online. Specifically, Step 808 may executed by a target object terminal 740.

In some embodiments, the target object terminal may feed back the data acquisition body in the data acquisition module in a manner of manual input or voice input, i.e., a respondent may answer (i.e., feed back) a survey question in the manner of manual input or voice input. In some embodiments, the data fed back by the target object terminal is the answer data of the target object terminal to the data acquisition body. The answer data may be text, images, voice, etc.

In some embodiments, the operation that the plurality of target object terminals feed back at least one piece of data online after receiving the data acquisition modules include the following operation. The plurality of target object terminals execute the data acquisition body according to the data acquisition logic to acquire the at least one piece of data. In some embodiments, a respondent may answer a corresponding survey question according to the execution logic of the survey question. Exemplarily, the taking the execution logic of the survey question being sequential execution as an example, if a survey questionnaire includes survey question 1, survey question 2, survey question 3, and survey question 4, then the respondent answers according to the sequence of survey question 1, survey question 2, survey question 3, and survey question 4. Reference is made to Step 802 and related description thereof for more details about the data acquisition logic structure. Because the data acquisition body is an execution unit configured to acquire data, in some embodiments, the data acquisition body may acquire the at least one piece of data. The data may include feedback data of the respondent, i.e., the answer data of the respondent to the survey question.

In some embodiments, the operation that the data acquisition body is executed to acquire the at least one piece of data includes the following operations. One or more paragraphs of text, and/or one or more pictures are displayed. A third acquisition instruction is acquired, herein the third acquisition instruction is a first click at one or more text selection positions of the text, and/or a second click at one or more picture selection petitions of the picture. First differential display is performed at the text selection position according to the first click, and/or, second differential display is performed at the picture selection position according to the second click. The at least one piece of data is determined according to the first click and/or the second click.

In some embodiments, the survey question acquired by the data acquisition body may be a click question. When the click question is executed, the data acquisition body may acquire data according to a click operation of the target object terminal. The click operation includes but is not limited to a mouse click operation and a touch click operation of a user. In some embodiments, the click question may be a picture click question, and/or a text click question. In some embodiments, when the click question is executed, one or more paragraphs of text, one or more pictures, and a combination thereof may be displayed. In some embodiments, the click question may be displayed on an interaction interface, for example, a browser interface and an application program interface, of the target object terminal.

In some embodiments, a third acquisition instruction is acquired according to a click operation of the target object terminal. In some embodiments, the third acquisition instruction is a first click at one or more text selection positions of the text, and/or a second click at one or more picture selection petitions of the picture; In some embodiments, the first click and the second click may include, but is not limited to, at least one of the followings: click of a certain point and click of a region.

In some embodiments, differential display may include, but is not limited to, at least one of the following: highlight display, highlighted display, flickering display, and marking display.

In some embodiments, the at least one piece of data may be determined according to the first click and/or the second click. In some embodiments, the click content (for example, text and/or pictures) of the first click and/or the second click may be determined as the at least one piece of data. The at least one piece of data is the feedback (i.e., answer) data of the target object terminal to the survey question.

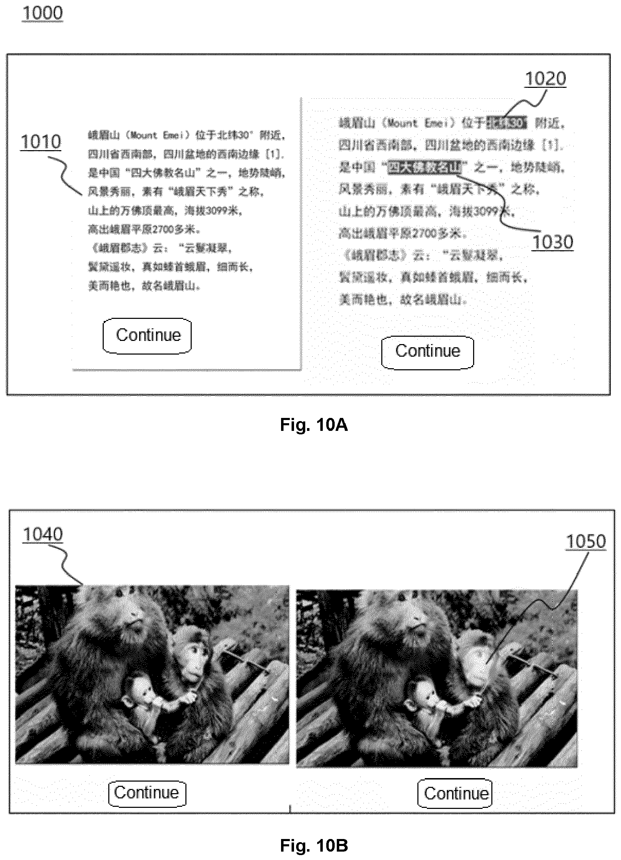

Reference is made to Fig. 10A-Fig. 10B, which are schematic diagrams of an acquisition structure of a click question according to some embodiments of the specification. As shown in Fig. 10A, which is a schematic diagram of an acquisition structure of a text click question, herein, 1010 is a displayed text, 1020 is a first click on the text 1010, and 1030 is a second click on the text 1010. It may be known from Fig. 10A that the first click 1020 and the second click 1030 in Fig. 10A are both subjected to highlighted display (i.e., differential display). As shown in Fig. 10B, which is a schematic diagram of an acquisition structure of a picture click question, herein, 1040 is a displayed picture, 1050 is a click on the picture 1040. It may be known from Fig. 10B that the click in Fig. 10B is subjected to highlighted display (i.e., differential display).

At Step 810, the acquisition end performs online analysis on the basis of received at least one piece of data.

Specifically, Step 810 may be executed by the acquisition end 710.

In some embodiments, the data analysis may be the analysis on answer data to a survey question. In some embodiments, the analysis may be performed according to the type of the survey question. For example, the type of the survey question is an open question, and then the analysis of the question may include viewpoint extraction and/or viewpoint clustering of the answer data to the open question. For example, the type of the survey question is a choice question, and then the analysis of the question may be the number of the chosen options of the choice questions and/or the proportions of different choices.

Fig. 11 is an exemplary flowchart of executing a data acquisition body according to a data acquisition logic according to some embodiments of the application.

At Step 1102, the first parameter transmitted when the communication platform is called is acquired, a second parameter provided by the communication platform is acquired, and/or a third parameter provided by the target object terminal is acquired. Specifically, Step 1102 may be executed by a target object terminal 740.

It may be known from the previous description that the first parameter is determined by the acquisition domain, and reference is make to Step 804 and related description for more details about the acquisition domain. In some embodiments, the acquisition domain may be a set of a screening condition of a survey population. Because the first parameter is determined by the acquisition domain, the first parameter is at least one parameter determined by the set of the screening condition of the survey population. For example, the acquisition domain is a population engaged in the financial industry, and then the first parameter may be the parameter representing "finance". In some embodiments, the first parameter may consist of various character strings, for example, numbers, symbols, or letters.

In some embodiments, the second parameter may be at least one characteristic parameter of the target object terminal provided by the communication platform. The characteristic parameter may include, but is not limited to, at least one of the following: personal information registered by the target object terminal on the communication platform and historical behavior information generated on the communication platform.

In some embodiments, the third parameter provided by the target object terminal includes the information provided by the target object terminal, for example, the time that the target object terminal uses a terminal device every day, browse records that the target object terminal uses the terminal device, and information, such as pictures and address books stored in the terminal device of the target object terminal.

At Step 1104, the jump according to parameters is executed according to the first parameter, the second parameter, and/or the third parameter. Specifically, Step 1104 may be executed by the target object terminal 740.

The parameter determined by the acquisition domain will be transmitted to the platform when the communication platform for distributing questionnaires is called. After the questionnaires are distributed to different respondents by the platform, the target object terminal may be asked according to a jump logic of the survey question corresponding to the parameter. Taking the first parameter being an identifier as an example, if the acquisition domain is female at the age of 20-25 and the transmitted first parameter is C1, the acquisition domain is female at the age of 50-60 and the transmitted first parameter is C2, the jump logic of the survey questions corresponding to C1 is to jump to the third question after answering the first question, and the jump logic of the survey questions corresponding to C2 is to jump to the fifth question after answering the first question, then the target object terminal jumps to the third question after answering the first question after the platform distributing the questionnaires to the female at the age of 20-25, and the target object terminal jumps to the fifth question after answering the first question after the platform distributing the questionnaires to the female at the age of 50-60.

In some embodiments, the operation of jumping to ask questions may also be realized on the survey questions in a survey questionnaire according to a second parameter provided by the communication platform. Taking the second parameter being the historical behavior information generated by the communication platform as an example, herein the communication platform is a network reading platform, the historical behavior information generated by the communication platform is a book reading record of a user, if the survey question is: "What's your impressions after reading the Dream of Red Mansion?", then the survey question jumps to the target object terminal of which the historical behavior information (i.e., the second parameter) includes the reading record of the Dream of Red Mansion.

In some embodiments, the operation of jumping to ask questions may also be realized on the survey questions in a survey questionnaire according to a third parameter provided by the communication platform. Taking the third parameter being the browsing record of the target object terminal using the terminal device as an example, if the survey question is: "What's your favorite website for purchasing mother and baby products?", then the survey question may jump to the target object terminal with the device browsing record (i.e., the third parameter) including mother and baby products.

In some embodiments, the operation of jumping may also be performed in combination with three parameters. Still taking the previously described example as an example, and taking the first parameter transmitted by the acquisition domain being C1 as an example, the target object terminal jumps to the third question after answering the first question, jumps to the fifth question: "What's your impressions after reading the Dream of Red Mansion? " according to the second parameter (for example, the generated historical record of a user reading books) provided by the communication platform after answering the third question, and jumps to the eighth question: "What's your favorite website for purchasing mother and baby products?" according to the third parameter (for example, the mother and baby product browsing record of the target object terminal using the terminal device) provided by the target object terminal after answering the fifth question. In some embodiments, the jump sequence according to any one of the parameters is not limited when jumping in combination with a plurality of parameters. For example, it may jump according to a first parameter first, then jump according to a second parameter, and finally, jump according to a third parameter. For another example, it may jump according to the second parameter first, then jump according to the first parameter, and finally, jump according to the third parameter.

According to the above description, the answering logic of the target object terminal may be determined in on a questionnaire according to various parameter conditions (for example, a first parameter, a second parameter, and/or a third parameter), so that it is unnecessary to preset questionnaires with different answering logics for different populations, which improves the setting flexibility of the answering logics of the survey questions in the questionnaires.

The embodiments of the specification further provide a directional data acquisition apparatus, including a processor. The memory is configured to execute the previously described directional data acquisition method. The method may include the following operation. The acquisition end determines a data acquisition module according to an acquired first acquisition instruction. A Scheduling end acquires a second acquisition instruction according to a data acquisition target to determine an acquisition domain. A distributing end sends the data acquisition module to a plurality of target object terminals on the basis of the acquisition domain by calling a sending interface of one or more communication platforms. The plurality of target object terminals feed back at least one piece of data online after receiving the data acquisition module, and returns the at least one piece of data to the acquisition end. The acquisition end performs online analysis on the basis of the received at least one piece of data.

The embodiments of the specification further provide a computer readable storage medium. The computer readable storage medium stores computer instructions. A computer executes the previously described directional data acquisition method after reading the computer instructions in the storage medium. The method may include the following operation. The acquisition end determines a data acquisition module according to an acquired first acquisition instruction. A Scheduling end acquires a second acquisition instruction according to a data acquisition target to determine an acquisition domain. A distributing end sends the data acquisition module to a plurality of target object terminals on the basis of the acquisition domain by calling a sending interface of one or more communication platforms. The plurality of target object terminals feed back at least one piece of data online after receiving the data acquisition module, and returns the at least one piece of data to the acquisition end. The acquisition end performs online analysis on the basis of the received at least one piece of data.

The embodiments of the specification may have, but are not limited to, the beneficial effects. (1) The survey questionnaires are automatically distributed to the target object terminals in the acquisition domain through a communication platform without manual distribution, which realizes high-efficiency directional survey. (2) The data acquisition module may include various data acquisition logic structures, so that the survey questionnaire with a complex answer logic can be generated, and the profession degree of the survey questionnaire is improved. It is to be noted that different beneficial effects may be achieved in different embodiments. The beneficial effects achievable in different embodiments may be any one or combination of the above, or may be any other achievable beneficial effects.

In addition, specific terms are used in the application to describe the embodiments of the application. For example, "an embodiment", "one embodiment", and/or "some embodiments" mean/means a certain feature, structure, or characteristic related to at least one embodiment of the application. Therefore, it is to be emphasized and noted that "one embodiment", or "an embodiment", or "an alternative embodiment" mentioned twice or for many times at different positions in the specification does not always refer to the same embodiment. In addition, some features, structures, or characteristics in one or more embodiments of the application may be combined as appropriate.

In addition, those skilled in the art can understand that each aspect of the application may be explained and described with a plurality of patentable sorts or conditions, including combinations of any new or useful procedures, machines, products, or substance, or any new and useful improvements thereof. Correspondingly, each aspect of the application may be executed completely by hardware, executed completely by software (including firmware, resident software, microcodes, etc.), or executed by a combination of the hardware and the software. The hardware or software may be called a "data block", "module", "engine", "unit", "component", or "system". In addition, each aspect of the application may be represented as a computer product in one or more computer-readable media, and the product includes a computer-readable program code.

The computer storage medium may include a propagated data signal with a computer program code therein, for example, on a baseband or as a part of a carrier. The propagated signal may be represented in many forms, including an electromagnetic form, an optical form, the like, or a proper combination form. The computer storage medium may be any computer-readable medium except a computer-readable storage medium, and the medium is connected to at least one instruction execution system, apparatus, or device to implement a program for communication, propagation, or transmission. The program code in the computer storage medium may be propagated through any suitable medium, including radio, a cable, an optical fiber, a Radio Frequency (RF), a similar medium, or any combination of the media.

The computer program code required by the operation of each part of the application may be written by any one or more programming languages, including an object-oriented programming language such as Java, Scala, Smalltalk, Eiffel, JADE, Emerald, C++, C#, VB.NET, and Python, a conventional procedural programming language such as C language, Visual Basic, Fortran2003, Perl, COBOL2002, PHP, and ABAP, a dynamic programming language such as Python, Ruby, and Groovy, another programming language, etc. The program code may run completely in a user computer, or run in the user computer as an independent software package, or partially run in the user computer and partially run in a remote computer, or run completely in the remote computer or a server. Under the latter condition, the remote computer may be connected with the user computer through any network form such as a Local Area Network (LAN) or a Wide Area Network (WAN), or connected to an external computer (for example, through the Internet), or in a cloud computing environment, or used as service such as Software as a Service (SaaS).

In addition, unless specified in the claims, the order of the processing elements and sequence, use of numerals and letters, or use of other names in the application is not intended to limit the orders of the flows and methods of the application. Although some invention embodiments that seem useful at present are discussed through various examples in the above disclosure, it should be understood that such details only achieve a purpose of description, and the appended claims are not limited to the disclosed embodiments and intended to cover all corrections and equivalent combinations consistent with the essence and scope of the embodiments of the application instead. For example, the system component described above may be implemented through a hardware device, but may also be implemented only through a software solution. For example, the described system is installed in an existing server or mobile device.

Similarly, it should be noted that, for simplifying the expressions disclosed in the application to help to understand one or more invention embodiments, multiple features may sometimes be incorporated into one embodiment, drawing, or the description thereof in the above description about the embodiments of the application. However, such a disclosure method does not mean that an object of the application needs more features than those mentioned in the claims. In practice, the features of the embodiment are fewer than all features of a single embodiment disclosed above.

Numerals describing the numbers of components and attributes are used in some embodiments. It should be understood that such numerals for describing the embodiments are modified with modifiers "about", "approximately", or "substantially" in some examples. Unless otherwise specified, "about", "approximately", or "substantially" represents that the numeral allows a change of ±20%. Correspondingly, in some embodiments, numerical parameters used in the specification and the claims are all approximate values, and the approximate values may change according to characteristics required by individual embodiments. In some embodiments, the numerical parameter should consider specified valid digits and adopt a general digit retention method. Although numerical ranges and parameters, in some embodiments of the application, used to confirm the breadths of scopes thereof are approximate values, such numerical values are set as accurately as possible in a possible scope in specific embodiments.

The entire contents of each patent, patent application, patent application disclosure, and other materials such as articles, books, specifications, publications, and documents, cited in the application are incorporated in the application by reference, except historical application files inconsistent or conflicting with the contents of the application as well as files (appended to the application at present or latter) limiting the broadest scope of the claims of the application. It is to be noted that the description, definition, and/or use of terms in the application are/is taken as final if the description, definition, and/or use of terms in the materials appended to the application are/is inconsistent or conflict/conflicts with the contents as described in the application.

It should finally be understood that the embodiments in the application are only used to explain the principle of the embodiments of the application, and other transformations may also fall within the scope of the application. Therefore, as an example rather than restriction, alternative configuration of the embodiment of the application may be considered consistent with the teaching of the application. Correspondingly, the embodiments of the application are not limited to the embodiments clearly introduced and described in the application.

## Claims

1. A data acquisition method, comprising:
setting, by an acquisition end, at least one acquisition domain for each of at least one data acquisition module, and presetting a threshold value for acquisition times of the acquisition domain;
sending, by a distributing end, the data acquisition module to a plurality of target object terminals on the basis of the acquisition domain by calling a sending interface of one or more communication platforms;
feeding back, by the plurality of target object terminals, at least one piece of data online after receiving the data acquisition module online, and returning the at least one piece of data to the acquisition end online; and
performing, by the acquisition end, online analysis on the at least one piece of data based on the received at least one piece of data.

2. The data acquisition method as claimed in claim 1, further comprising:
generating, by a shunting end, a common acquisition unit, sending the common acquisition unit to a plurality of user terminals, and determining whether there is a target data acquisition module set with a target acquisition domain in the at least one data acquisition module on the basis of first data fed back by the user terminals on the common acquisition unit, wherein the target acquisition domain refers to an acquisition domain matched with the first data;
if yes, determining whether the acquisition times of the target acquisition domain of the target data acquisition module reach a threshold value or not;
if no, sending the target data acquisition module to the user terminals; and
feeding back, by the user terminals, second data to the received target data acquisition module, and sending the second data to the acquisition end.

3. The method as claimed in claim 2, further comprising:
constructing, by the acquisition end, a data pool for each of the at least one data acquisition module; and
segmenting, by the acquisition end, the data pool into a plurality of sub-data pools, wherein the plurality of sub-data pools are respectively configured to store the second data fed back by the user terminals matched with the acquisition domain.

4. The method as claimed in claim 3, wherein the storage capacity of the sub-data pool is in positive correlation with the acquisition times of the acquisition domain.

5. The method as claimed in claim 2, wherein the generating, by a shunting end, a common acquisition unit comprises:
extracting, by the shunting end, the common acquisition unit from the at least one data acquisition module.

6. The method as claimed in claim 2, wherein the generating, by a shunting end, a common acquisition unit comprises:
generating, by the shunting end, the common acquisition unit on the basis of the acquisition domain.

7. A data acquisition system, comprising:
an acquisition end, configured to set at least one acquisition domain for each of at least one data acquisition module, and preset a threshold value for acquisition times of the acquisition domain;
a shunting end, configured to: generate a common acquisition unit, send the common acquisition unit to a plurality of user terminals, and determine whether there is a target data acquisition module set with a target acquisition domain in the at least one data acquisition module on the basis of first data fed back by the user terminals on the common acquisition unit, wherein the target acquisition domain refers to an acquisition domain matched with the first data;
if yes, determine whether the acquisition times of the target acquisition domain of the target data acquisition module reach a threshold value or not;
if no, send the target data acquisition module to the user terminals; and
user terminals, configured to feed back second data to the received target data acquisition module, and send the second data to the acquisition end.

8. The data acquisition system as claimed in claim 7, wherein the acquisition end is configured to:
construct a data pool for each of the at least one data acquisition module; and
segment the data pool into a plurality of sub-data pools, wherein the plurality of sub-data pools are respectively configured to store the second data fed back by the user terminals matched with the acquisition domain.

9. The data acquisition system as claimed in claim 8, wherein
the storage capacity of the sub-data pool is in positive correlation with the acquisition times of the acquisition domain.

10. The data acquisition system as claimed in claim 7, wherein the shunting end is configured to:
extract the common acquisition unit from the at least one data acquisition module.

11. The data acquisition system as claimed in claim 7, wherein the shunting end is configured to:
generate the common acquisition unit on the basis of the acquisition domain.

12. The method as claimed in claim 1, wherein
the setting, by an acquisition end, at least one acquisition domain for each of at least one data acquisition module comprises:
determining, by the acquisition end, a data acquisition module according to an acquired first acquisition instruction; and
acquiring, by a Scheduling end, a second acquisition instruction according to a data acquisition target to determine the acquisition domain.

13. The method as claimed in claim 1, wherein the data acquisition module comprises:
a data acquisition logic structure and at least one data acquisition body, wherein
the data acquisition body is an execution unit configured to acquire data; and
the data acquisition logic structure comprises one or a combination of the following logics:
single execution, sequential execution, random execution, jump according to parameters, and/or jump according to acquired data.

14. The method as claimed in claim 13, wherein the feeding back, by the plurality of target object terminals, at least one piece of data online after receiving the data acquisition module online comprises:
executing, by the plurality of target object terminals, the data acquisition body according to the data acquisition logic to acquire the at least one piece of data.

15. The method as claimed in claim 1, wherein the calling a sending interface of one or more communication platforms comprises:
determining the called one or more communication platforms according to the acquisition domain; and
calling the sending interface of one or more communication platforms, and transmitting a first parameter determined by the acquisition domain.

16. The method as claimed in claim 14, wherein the executing the data acquisition body according to the data acquisition logic comprises:
acquiring the first parameter transmitted when the communication platform is called, acquiring a second parameter provided by the communication platform, and/or acquiring a third parameter provided by the target object terminal; and
executing the jump according to parameters according to the first parameter, the second parameter, and/or the third parameter.

17. The method as claimed in claim 14, wherein executing the data acquisition body to acquire the at least one piece of data comprises:
displaying one or more paragraphs of text, and/or one or more pictures;
acquiring a third acquisition instruction, wherein the third acquisition instruction is a first click at one or more text selection positions of the text, and/or a second click at one or more picture selection petitions of the picture;
performing first differential display at the text selection position according to the first click, and/or, performing second differential display at the picture selection position according to the second click; and
determining the at least one piece of data according to the first click and/or the second click.

18. The method as claimed in claim 12, wherein the determining the acquisition domain comprises:
determining one or more condition directions according to the second acquisition instruction; and
determining a condition value of the one or more condition directions according to the second acquisition instruction.

19. A data acquisition apparatus, comprising a processor, wherein the processor is configured to execute the data acquisition method as claimed in any one of claims 1 to 5 and claims 11 to 18.

20. A computer readable storage medium, wherein the storage medium stores computer instructions; and a computer executes the data acquisition method as claimed in any one of claims 1 to 5 and claims 11 to 18 after reading the computer instructions in the storage medium.
